# EUROPÄISCHE PATENTSCHRIFT

(11) **EP 0 853 238 B1**
(45) Veröffentlichungstag und Bekanntmachung des Hinweises auf die Patenterteilung: **18.09.2002**
(21) Anmeldenummer: 98100251.2
(22) Anmeldetag: 09.01.1998
(51) Int. Cl.: G01N 1/42

(54) **Probenhalter für wasserhaltige Proben sowie Verfahren zu deren Verwendung**
Sample holder for water-containing samples and method for use thereof
Dispositif port échantillon pour échantillons contenant de l'eau et procédé d'utilisation d'un tel dispositif

(30) Priorität: 13.01.1997 CH 5397
(43) Veröffentlichungstag der Anmeldung: 15.07.1998
(73) Patentinhaber: Studer, Daniel, Dr., 3293 Dotzigen (BE) (CH)
(72) Erfinder: Studer, Daniel, Dr., 3293 Dotzigen (BE) (CH)
(74) Vertreter: Dolder, Fritz

(56) Entgegenhaltungen:
- EP-A- 0 275 829
- WO-A-96/02801
- DE-A- 1 806 741
- US-A- 4 688 387
- HOHENBERG H ET AL: "HIGH-PRESSURE FREEZING OF CELL SUSPENSIONS IN CELLULOSE CAPILLARY TUBES" JOURNAL OF MICROSCOPY, Bd. 175, Nr. PART 01, Juli 1994, Seiten 34-43, XP000645911

## Beschreibung

Die Erfindung bezieht sich auf Probenhalter für wasserhaltige Proben, sowie auf ein Verfahren zu deren Verwendung, vorzugsweise für das Gefrieren unter hohem Druck.

Die Anwendung tiefer Temperaturen zur Erhaltung biologischer Objekte (Zellen, Gewebe, Organe) während längerer Zeit in lebensfähigem Zustand hat zur Entwicklung der Technik der sog. Kryopreservation geführt. In WO 96/02801 entsprechend PCT/GB95/01677 werden Probenhalter eingesetzt, welche aus Kupferröhrchen von 3.8 mm Durchmesser und einer Länge von 134 mm bestehen, in denen Kapillaren aus Kunststoff von 0.25 oder 0.5 ml Volumen mit den biologischen Proben gesteckt werden. Zwischen der Innenwand der Kupferröhrchen und der Kunststoffkapillare mit der Probe befindet sich eine dünne Luftschicht, welche verhindert, dass sich beim Abkühlen der Probe ein vertikaler Temperaturgradient bildet. Eine grössere Zahl derartiger Kupferröhrchen werden zu einem Probenhalter vereinigt und in vertikaler Position in ein Kühlmedium getaucht derart, dass dieses Kühlmedium zwischen den einzelnen Röhrchen passieren kann.

In US-PS 4,688,387 (Conaway) wird eine biologische Probe von den Ausmassen eines Organs zur Kryopreservation vor dem Abkühlen unter Druck gesetzt, welcher ausreicht, um die Bildung von Eis l beim nachfolgenden Abkühlen der Probe zu verhindern, typischerweise Drücke über 2100 atm. Das Verfahren umfasst nach der Vorpräparation des Organs bei Zimmertemperatur eine *langsame* und *stetige* Erhöhung des Drucks auf einen zur Verhinderung der Eisbildung erforderlichen Wert. Anschliessend wird die Probe auf kryogene Temperaturen unter 173 °K abgekühlt. Schliesslich wird der Druck unter Aufrechterhaltung der kryogenen Temperatur wieder auf Atmosphärendruck reduziert derart, dass in einem metastabilen Zustand eine andere Phase als kristallines Eis l aufrechterhalten wird.

Völlig anderen Zwecken dienen die Verfahren des schnellen Gefrierens wasserhaltiger Proben unter hohem Druck, welche als Präparationstechnik für bildgebende Verfahren in der Elektronenmikroskopie oder der Lichtmikroskopie eingesetzt werden. Derartige Verfahren bezwecken eine möglichst schnelle Vitrifizierung lebender Proben von geringen Ausmassen (Millimeterbereich) unter optimaler Aufrechterhaltung der dreidimensionalen Strukturen dieser Proben, wobei ein Überleben der Proben durch die Eiskristallbildung beim Auftauen ausgeschlossen ist. Ein derartiges Verfahren des Hochdruckgefrierens zum Zwecke der Präparation ist aus der deutschen Patentschrift DE-PS 1 806 741 bekannt.

Der Vorteil des Gefrierens unter hohem Druck gegenüber Normaldruck kann folgendermassen erklärt werden: Appliziert man während des Abkühlens ca. 2000 bar Druck auf die Probe, so reduziert sich die zur Vitrifikation (keine Eiskristallbildung, keine Segregationen) benötigte Abkühlrate um den Faktor hundert, damit ist es möglich maximal 200µm dicke, scheibenförmige Proben zu vitrifizieren. Es ist ebenfalls festzuhalten, dass bei allfälliger Eisbildung unter Druck die Maschengrösse der Segregationsmuster stark reduziert ist, d.h. ca. 200µm dicke wässerige Proben unter 2000 bar gefroren sind ultrastrukturell (Nanometerbereich) optimal erhalten (STUDER D., MICHEL M., WOHLWEND M., HUNZIKER E.B. und BUSCHMANN M.D., Vitrification of articular cartilage by high pressure freezing, J. of Microscopy **179** (1995), 312-332). Bis heute wurde der Vorteil für das Einfrieren unter hohem Druck für verhältnismässig dicke Proben (Probendicke im Bereich um 2 mm) nicht erkannt. Die Reduktion der Maschengrösse der Segregationsmuster bewirkt, dass derartige Proben im Lichtmikroskop optimal erhalten scheinen, da die im µm-Bereich liegenden Segregationen nicht sichtbar sind.

Der in der Patentschrift DE-B 1 806 741 beschriebene Probenhalter eignet sich schlecht für die Weiterverarbeitung der gefrorenen Proben. Es handelt sich dabei um einen röhrenförmigen, einseitig geschlossenen, dünnwandigen Behälter aus z.B. Kupfer, der an seinem oberen Ende trichterförmig erweitert ist. Die Probe im Innern dieses Probenhalters wird durch eine Hydraulik unter Verwendung einer Druckübertragerflüssigkeit, beispielsweise Wasser, unter Druck gesetzt und durch Aufspritzen eines Kühlmittels von aussen abgekühlt. Es ist bei dieser Vorrichtung fast unmöglich, die Proben nach dem Gefrieren weiter zu verarbeiten. Durch das Anbringen einer Sollbruchstelle konnte wenigstens die sogenannte Gefrierätztechnik (freeze etching) angewendet werden. Mit dieser Technik werden dünne Metallabdrücke hergestellt, die untersucht werden können.

Die kommerziell erhältlichen Hochdruckeinfriergeräte nach dem Stand der Technik verfahren folgendermassen: Sie verwenden flüssigen Stickstoff von ca. -150°C sowohl als Druckübertragungs- wie auch als Kühlmittel. Dessen Temperatur beträgt bei Normaldruck -196°C, bei 2000 atm ist er bei dieser Temperatur fest. Die apparativen Nachteile derartiger Anlagen, bei denen flüssiger Stickstoff sowohl als Drückübertragungs- als auch als Kühlmittel eingesetzt wird, bestehen in folgendem: Die Maschinen sind verhältnismässig gross (ca. 0.8x1.6x1.5m³) und schwer (>600kg). Ihr Einsatz ist mit einem Unfallrisiko für das Bedienungspersonal verbunden: Das Aufspritzen von mehr als 100 ml flüssigem Stickstoff unter 2000 bar erfordert relativ grosse Bohrungen in der Druckkammer, welche dementsprechend sehr massiv konstruiert werden muss. Unfälle sind bekannt; bis heute entstanden keine Personenschäden, der Sachschaden kann jedoch sehr hoch ausfallen (5-20kFr). Die Kosten dieser Apparaturen sind nach wie vor verhältnismässig hoch, da sie in kleinen Stückzahlen aus hochwertigen Werkstoffen gefertigt werden müssen (150-300kFr.).

Die biologischen Proben befinden sich in derartigen Anlagen in zwei dünnwandigen metallischen Halbschalen (sog. aluminium sandwich: 3 mm Aussendurchmesser, innerer Durchmesser 2 mm, mit variabler Hohlraumdicke von 100-600µm), die zwischen zwei Stahllamellen festgeklemmt werden. Diese Lamellen sind ihrerseits an einem massiven Stahlkolben (Probenhalter) festgeschraubt. Dieser Probenhalter wird mit der Probe in eine Hochdruckkammer eingeführt und durch einen massiven Querbolzen arretiert. Die Hochdruckkammer wird durch einen dichtenden O-Ring am Probenhalter verschlossen.

Der Einfrierzyklus läuft in diesen Anlagen folgendermassen ab: Um Druckanstieg und Kühlung zu koordinieren, wird die Hochdruckkammer zuerst für ca. 30 ms mit Ethanol gefüllt, um die korrekte Korrelation von Druckanstieg und Kühlung zu ermöglichen. Dann werden durch einen Hochdruckzylinder ca. 100 -160 ml kalter flüssiger Stickstoff in 300-600 ms durch die Druckkammer geleitet. Die Druckkammer weist einen Auspuff auf, dessen Durchmesser wesentlich kleiner als die Zuleitung dimensioniert ist. Der Druck wird durch Stauung an diesem Auspuff aufgebaut. Würde die Druckkammer nicht in der geschilderten Art vorgängig mit Ethanol gefüllt, würde die Probe gefroren, bevor sie unter Druck gesetzt wurde. Ethanol in der Druckkammer ist notwendig für die korrekte Abstimmung von Druckaufbau und Kühlung. Nachteilig wirkt sich dabei aus, dass Ethanol in die Probe diffundieren und darin Artefakte bilden kann. Zudem werden nach dem geschilderten Verfahren Suspensionen oft aus den Metallhalbschalen ausgeblasen.

Reproduzierbare Resultate werden dadurch erreicht, dass die Halbschalen in 1-Hexadecen getaucht mit der biologischen Probe bestückt werden. 1-Hexadecen weist gegenüber wässerigen Lösungen folgende Vorteile auf: Es können ausserhalb der Probe keine Eiskristalle entstehen; die kleine Oberflächenspannung vermeidet Gasblasen zwischen den Halbschalen, welche beim Druckaufbau kollabieren würden. Da 1-Hexadecen mit Wasser nicht mischbar ist, wird die wässerige Probe während der Präparation nicht verändert. Der Gefrierpunkt liegt bei 4°C, erhöht sich jedoch unter Druck (2000 atm.) auf ca. 25°C , wodurch sich eine feste, jedoch nicht rigide "Schale" um die wässerige Probe bildet. Diese "Schale" ist wichtig um während des Abkühlprozesses unter hohem Druck die Proben nicht zu verlieren, da der Stickstofffluss eine Geschwindigkeit von mehr als 40m/s auf weist (STUDER D., MICHEL M. und MÜLLER M. High pressure freezing comes of age, Scanning Microscopy Supplement 3, **Vol. 189**, S.253-269).

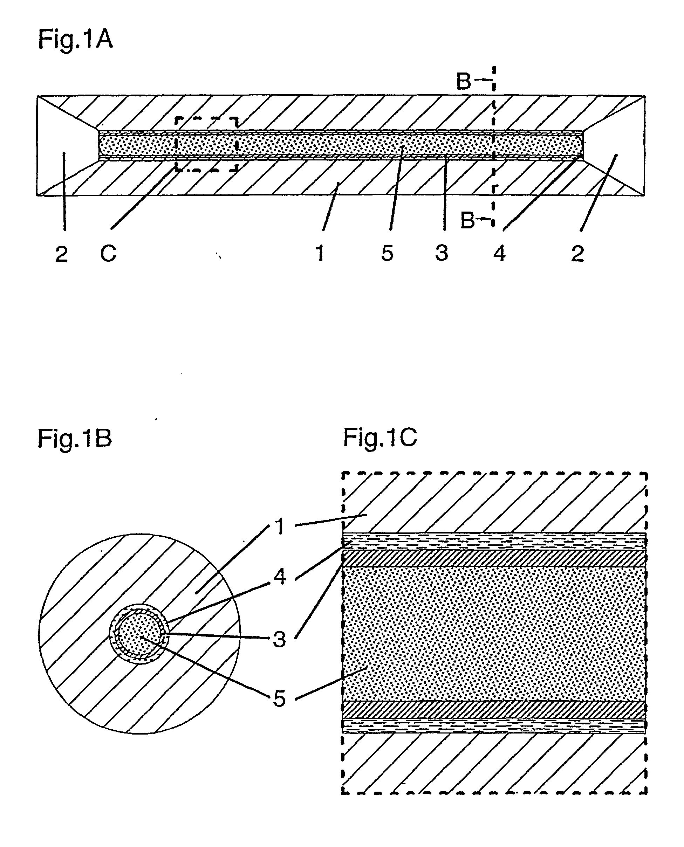

Allerdings sind biologische Proben in der Form von Suspensionen mit dieser Technik unter Verwendung von 1-Hexadecen immer noch schwierig zu handhaben. Deshalb wurden für die Aufnahme der biologischen Proben vorzugsweise Zellulosekapillaren von ca. 200 µm innerem Durchmesser und 10 bis 15 µm Wandstärke der porösen Wand eingesetzt, welche in Stücke von ca. 2 mm Länge zugeschnitten, zwischen die metallischen Halbschalen gelegt und leicht eingeklemmt werden. Diese Zellulosekapillaren sind im Probenhalter von 1-Hexadecen umgeben. Die Proben werden, wie bereits dargestellt, in einer Druckkammer nach dem Stand der Technik gefroren und können nach dem Frieren aus den dünnwandigen, metallenen Halbschalen, die als Probenhalter dienen,
manuell herausgenommen werden. (H. HOHENBERG, K. MANNWEILER, M. MÜLLER, High-pressure freezing of cell suspensions in cellulose capillary tubes, Journal of Microscopy **175** (1294), 34-43, insbesondere Fig. **1** S. 35).

Der Nachteil derartiger Probenaufnehmer aus metallischen Halbschalen besteht darin, dass die Manipulation der gefrorenen Proben, insbesondere ihr Entfernen aus dem festen 1-Hexadecen, schwierig ist und häufig zur Beschädigung oder zum Verlust von Proben führt. Daneben eignen sie sich aufgrund ihrer Geometrie nicht für die apparativ einfachere und dadurch kostengünstigere Druckübertragung auf die Probe durch einen getrennten Kreislauf für die Druckübertragungsflüssigkeit, wie er beispielsweise in DE-PS 1 806 741 beschrieben ist.

Die Aufgabe der vorliegenden Erfindung bestand dementsprechend darin, Probenhalter für die Aufnahme von wasserhaltigen Proben, insbesondere in Kapillaren aus Zellulose oder anderen Werkstoffen, zu konstruieren, welche für eine Verwendung im Rahmen von Hochdruckgefrierapparaturen mit getrennten Kreisläufen von Druckübertragungs- und Kühlmittel geeignet sind und eine leichte und sichere Manipulation der gefrorenen Proben, insbesondere bei deren Entnahme aus dem Probenhalter, gewährleisten. Zu diesem Zweck war es erforderlich, Probenhalter zu konstruieren, welche
- (-): hohe Abkühlgeschwindigkeiten auf die Probe übertragen,
- (-): ein schnelles Einfrieren unter hohem Druck ohne Unfallrisiko für das Bedienungspersonal ermöglichen,
- (-): auf einfache Weise mit den Kapillaren aus Zellulose oder anderen Werkstoffen bestückt werden können,
- (-): ein leichtes und sicheres Manipulieren der gefrorenen Probe, namentlich beim Entfernen der Kapillaren aus dem Probenhalter ermöglichen.

Die Aufgabe wird durch Probenhalter nach dem Kennzeichen des Patentanspruchs 1 sowie durch ein Verfahren zu deren Verwendung nach dem Kennzeichen des Patentanspruchs 10 gelöst.

Der erfindungsgemässe Probenhalter beseitigt den Nachteil schlecht weiter verarbeitbarer gefrorener Proben. Er ermöglicht es, die gefrorenen Proben auf einfache und sichere Weise allen bekannten Weiterverarbeitungsmethoden (Gefrierätzung, Gefriertrocknung, Gefriersubstitution, Gefrierschneiden, usw.) zuzuführen.

Der erfindungsgemässe Probenhalter eignet sich für die Anwendung in Apparaturen, welche einen getrennten Kreislauf von Druckübertragungs- und Kühlmittel aufweisen, entsprechend den Apparaturen nach der deutschen Patentschrift DE-PS 1 806 741. Dies ermöglicht eine Verwendung in relativ kleinen und kostengünstigen Apparaturen für das Hochdruckeinfrieren. Dadurch verringert sich das Betriebsrisiko des Hochdruckeinfrierens beträchtlich, da diese kleinen Apparaturen mit einem Volumen des Druckübertragungsmittels von weniger als 1ml auskommen, während die Apparaturen, welche flüssigen Stickstoff sowohl als Druckübertragungs- als auch als Kühlmittel einsetzen, mit den Probenhaltern nach dem Stand der Technik mindestens 100ml Druckübertragungsmittel benötigen. Beim Einsatz der erfindungsgemässen Probenhalter in den Apparaturen mit getrenntem Kreislauf von Druckübertragungs- und Kühlmittel würde daher bei einem Unfall eine rund hundertmal kleinere Druckmittelmenge als in den Apparaturen mit flüssigem Stickstoff als Druckübertragungs- und Kühlmittel freigesetzt, welche nur sehr geringen Schaden anrichten dürfte.

Mit den erfindungsgemässen Probenhaltern wird die Voraussetzung geschaffen, das Einfrieren von Proben unter hohem Druck für die Licht- und Elektronenmikroskopie erfolgreich in Medizin und Biologie anzuwenden. Das breite Spektrum von Proben, die mit den erfindungsgemässen Probenhaltern unter hohem Druck kostengünstig gefroren werden können, dürfte die Anwendungsmöglichkeiten der Hochdruck-Einfrier-Methode in den Naturwissenschaften (Ultrastrukturbeschreibung) noch wesentlich erweitern. Das Hochdruck-Einfrieren von verhältnismässig dikken Proben erscheint besonders vorteilhaft für Anwendungen in der Pathologie, da mit dem für dickere Proben beschriebenen Probenhalter qualitativ gute histologische Schnitte für die Diagnose in kürzester Zeit, etwa während einer laufenden Operation, hergestellt werden können.

Im folgenden werden bevorzugte Ausführungsformen der erfindungsgemässen Probenhalter sowie deren Verwendung anhand von Zeichnungen beispielhaft dargestellt. Dabei zeigen:
- Fig. 1-A: einen Längsschnitt eines Probenhalters, der aus einem massiven, metallischen, gut wärmeleitenden Rohr besteht;
- Fig. 1-B: einen vergrösserten Querschnitt eines Probenhalters gemäss B-B in Fig. 1-A;
- Fig. 1-C: eine vergrösserte Einzelheit gemäss Ausschnitt C in Fig. 1-A;
- Fig. 2-A: einen Längsschnitt eines Probenhalters für zylindrische, dünne Proben mit einem Innendurchmesser im Bereich von 0.3mm;
- Fig. 2-B: einen Querschnitt des Probenhalters gemäss B-B in Fig. 2-A;
- Fig. 2-C: eine vergrösserte Einzelheit gemäss Ausschnitt C in Fig. 2-A;
- Fig. 3-A: einen Längsschnitt eines Probenhalters für zylindrische, dünne Proben mit einem Innendurchmesser im Bereich von 0.3mm;
- Fig. 3-B: einen Querschnitt eines Probenhalters gemäss B-B in Fig. 3-A;
- Fig. 3-C: eine vergrösserte Einzelheit gemäss Ausschnitt C in Fig. 3-A;
- Fig. 4-A: einen schematischen Querschnitt durch eine Kühlkammer einer Hochdruckgefrierapparatur mit einer darin eingesetzten Probenhalterung für zylindrische, dünne Proben;
- Fig. 4-B: eine vergrösserte Einzelheit gemäss Ausschnitt B in Fig. 4-A

Der Probenhalter gemäss **Fig. 1** weist ein massives, metallisches gut wärmeleitendes *äusseres* Rohr **1** auf (vorzugsweise aus Kupfer, Innendurchmesser vorzugsweise im Millimeterbereich, Wandstärke entsprechend dem Innendurchmesser, Länge je nach Anforderungen im Bereich zwischen ca. 10 bis 20 mm). Dieses *äussere* Rohr **1** weist an beiden Stirnseiten eine Ausnehmung **2** auf, welche beispielsweise in der Form eines Konus ausgestaltet sein kann und zur Aufnahme der Anschlüsse für das Druckübertragungsmittel dient. In diesem *äusseren* Rohr **1** ist ein sehr dünnwandiges *inneres* Rohr **3** aus einem relativ gut wärmeleitenden Werkstoff, vorzugsweise einem geeigneten Polymer, eingesetzt, dessen Länge vorzugsweise der Länge des *äusseren* Rohres **1** entspricht, und das mit den zur Weiterverarbeitung von Proben üblichen Werkzeugen geschnitten werden kann. Polymer- und Metallrohr sind durch eine sehr dünne Schicht **4** einer nicht mit Wasser mischbaren Substanz, vorzugsweise eines Kohlenwasserstoffs (z.B. 1-Penten, 1-Chlorbutan, etc.) getrennt, die einen sehr niedrigen Gefrierpunkt (<-120°C) aufweist. Diese Schicht **4** wird dadurch gebildet, dass eine verhältnismässig "dicke", wasserhaltige Probe **5** in das *innere Rohr* **3** eingebracht, dieses *sowie das äussere Rohr 1 an*schliessend in die Flüssigkeit, z.B. den Kohlenwasserstoff **4** eingetaucht *werden* und *schliesslich das mit der Probe gefüllte innere Rohr 3* in das *äussere* Rohr **1** eingeschoben wird. Überflüssiger Kohlenwasserstoff tritt an der Gegenseite des *äusseren* Rohres **1** aus und kann dort manuell abgewischt werden. Während des Verfahrens des Hochdruckgefrierens befindet sich die Probe **5** im *inneren Rohr* **3***.*

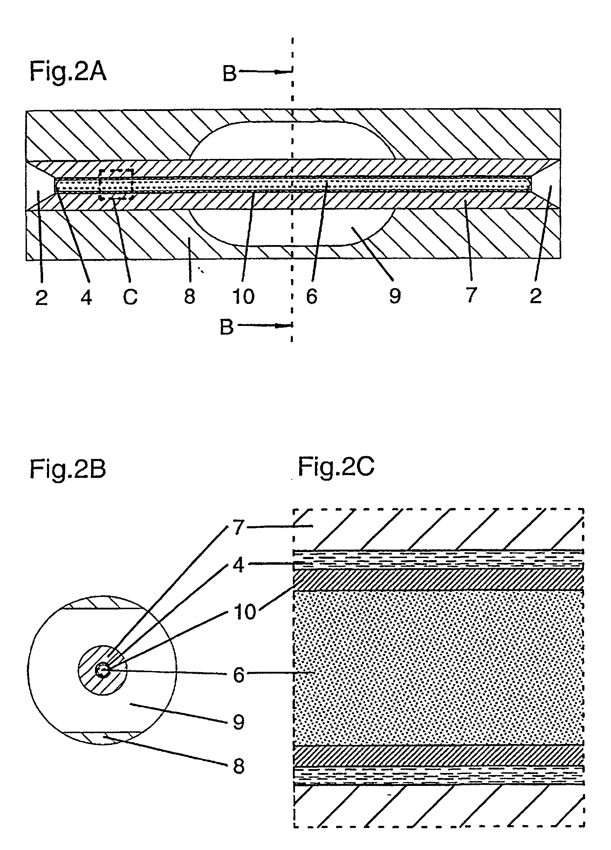

Der Probenhalter gemäss **Fig. 2** eignet sich für zylindrische, "dünne" Proben **6** mit einem Durchmesser vorzugsweise im Bereich von max. 0.3mm. Er weist eine gut wärmeleitende metallische *äussere* Kapillare **7** auf, die in einer bevorzugten Ausführungsform aus Kupfer besteht, einen bevorzugten Innendurchmesser im Bereich zwischen 0.1 bis 0.5 mm, vorzugsweise von 0.3 mm, sowie eine bevorzugte Wandstärke im Bereich von 0.3 bis 0.5 mm aufweist. Diese *äussere* Kapillare **7** ist an beiden Stirnseiten mit je einer Ausnehmung, beispielsweise einem Innenkonus **2**, zur Aufnahme der Anschlüsse von Leitungen, beispielsweise für ein Druckübertragungsmittel (Hochdruckleitungen) ausgestattet. Die Ummantelung **8** in der Form eines Hohlzylinders umgibt diese *äussere* Kapillare **7** und stellt einen integralen Bestandteil des Probenhalters dar. Sie ist vorzugsweise aus rostfreiem Stahl hergestellt und weist in ihrem mittleren Teil eine Ausnehmung in der Form eines Schlitzes **9** quer zur Hauptachse sowie in axialer Richtung eine Bohrung mit einem Durchmesser entsprechend dem Aussendurchmesser der *äusseren* Kapillare **7** auf. Die *äussere* Kapillare **7** wird formschlüssig in diese Ummantelung **8** gepresst. Diese Ummantelung **8** gestattet ein einfaches Manipulieren der Probenhalter, verhindert das Knicken der dünnen Metallkapillaren beim Einspannen in die Hochdruckeinfrieranlage und erlaubt es, die Proben nach Abschluss des Einfrierzyklus problemlos aus der Apparatur zu entfernen, da ein Klemmen durch deformierte Kapillarenden sicher verhindert wird.

Während des Hochdruckgefrierens befindet sich eine wasserhaltige, dünne Probe **6,** welche ihrerseits in eine *innere* Kapillare **10** aus einem porösen Polymerwerkstoff gefüllt ist, im Inne*nraum* der *äusseren* Kapillare **7**. Der Polymerwerkstoff soll einerseits porös sein und anderseits mit den zur Weiterverarbeitung von biologischen Proben üblichen Werkzeugen geschnitten werden können. Beispielsweise erfüllen *innere* Kapillaren aus poröser Zellulose, wie sie in Blutdialyse-Einheiten verwendet werden, diese beide Kriterien. In einer bevorzugten Ausführungsform weist eine derartige *innere* Kapillare **10** einen Innendurchmesser im Bereich von 0.1 bis 0.5 mm sowie eine Wandstärke im Bereich von 0.01 bis 0.1 mm auf. *Der Innenraum der äusseren* Kapillare 7 wird *durch* Eintauchen in eine nicht mit Wasser mischbare Flüssigkeit **4**, vorzugsweise einem Kohlenwasserstoff bzw. einem halogenierten Kohlenwasserstoff (z.B. 1-Penten, 1-Chlorbutan, usw.), der einen niedrigen Gefrierpunkt aufweist (<-120°C), aufgefüllt. *Die mit der wasserhaltigen Probe* ***(6)*** *gefüllte innere Kapillare* ***(10)*** *wird anschliessend* in *diesen Innenraum der äusseren* Kapillare **7** eingeführt.
Dadurch werden die *innere* Kapillare **10** aus dem porösen Werkstoff und die *äussere* Kapillare **7** durch eine dünne Schicht der Substanz **4**, vorzugsweise eines Kohlenwasserstoffs voneinander getrennt.

Die vorzugsweise eingesetzten Zellulosekapillaren stammen beispielsweise aus Blutdialyse-Einheiten. Sie sind polyvalent einsetzbar und ermöglichen es, kleine Organismen (z.B. Nematoden), Einzeller, Mikroorganismen, aber auch Gewebe-Mikrobiopsien (Hirn, Leber, etc.), sowie Gele, Suspensionen usw. unter hohem Druck zu frieren.

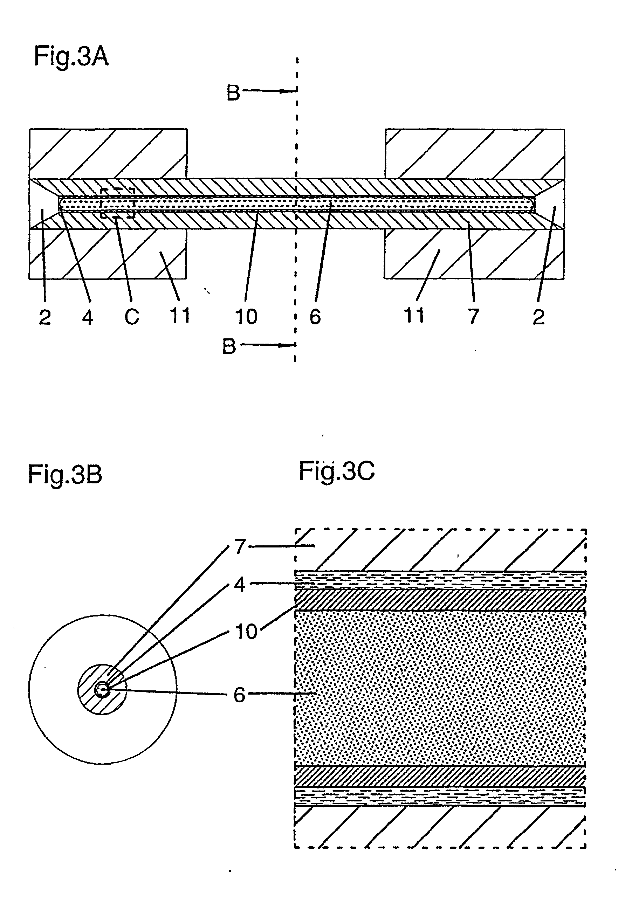

Der Probenhalter gemäss **Fig. 3** eignet sich ebenfalls für zylindrische, verhältnismässig dünne Proben **6** mit einem Durchmesser im Bereich von max. 0.3mm und besteht aus einer gut wärmeleitenden *äusseren* Kapillare **7** (vorzugsweise aus Kupfer), die an ihren Stirnseiten mit je einer Ausnehmung **2,** beispielsweise in der Form eines Konus, zur Aufnahme der Anschlüsse für das Druckübertragungsmittel versehen ist.

Im Unterschied zum Probenhalter aus **Fig. 2** ist die äussere Kapillare 7 an ihren beiden Stirnseiten mit je einer *Ummantelung in der Form eines* Hohlzylinders **11**, vorzugsweise aus rostfreiem Stahl ummantelt, welche einen integralen Bestandteil des Probenhalters darstellt und zusammen mit diesem manipuliert werden. Der Unterschied zur Ummantelung **8** aus **Fig. 2** besteht darin, dass die Abkühlung der Probe effizienter ist, der Probenhalter jedoch insgesamt weniger stabil ist. Die wasserhaltige Probe **6** im Innern der *äusseren* Kapillare **7** ist in *eine innere* Kapillare **10** der beschriebenen Art aus einem porösen Polymerwerkstoff gefüllt. Die *äussere* Kapillare und die *innere* Kapillare aus dem porösen Werkstoff sind in der gleichen Art wie für die Probenhalter aus **Fig. 1 und 2** beschrieben durch eine Schicht einer nicht mit Wasser mischbaren Substanz **4**, vorzugsweise eines Kohlenwasserstoffes bzw. halogenierten Kohlenwasserstoffs (z.B. 1-Penten, 1-Chlorbutan, etc.) getrennt, welcher einen sehr niedrigen Gefrierpunkt (<-120°C) aufweist und eine optimale Wärmeleitung zwischen Probe 6 und *äusserer Kapillare* **7** gewährleistet.

Die Länge der *äusseren* Kapillare **7** kann derart gewählt werden, dass diese entweder innerhalb der Ummantelung **8 bzw. 11** oder bündig mit deren Frontfläche endet **( Fig. 2-A und 3-A)** oder mit einem oder beiden Enden aus der Ummantelung herausragt. Das *äussere* Rohr **1** oder die Ummantelung **8 bzw. 11** kann an ihrer Aussenfläche mit einer Ausnehmung in der Form einer Ringnut versehen sein. Diese Ausnehmung dient dazu, das *äussere* Rohr **1** bzw. die Ummantelung **8 bzw. 11** und damit die *äussere* Kapillare **7** an einer vorbestimmten Stelle in einem Probenhalteraufnehmer **13** einer Untersuchungsanlage, beispielsweise einer Hochdruckgefrieranlage, zu verankern.

Das Verfahren zur Verwendung der erfindungsgemässen Probenhalter zum Zwecke des Hochdruckeinfrierens wasserhaltiger Proben weist die nachfolgenden Verfahrensschritte auf. Für die verhältnismässig "dicken" Proben der **Fig. 1** wird das gleiche Verfahren angewendet; die Manipulationen sind jedoch einfacher auszuführen, da die Dimensionen grösser sind. Die wasserhaltigen Proben **6,** vorzugsweise aus biologischem Material, werden folgendermassen in die porösen *inneren* Kapillaren **10** und die *äussere* Kapillare **7** eingebracht: Die *inneren* Kapillaren **10,** vorzugsweise aus poröser Zellulose, werden in an sich bekannter Weise mit einem geeigneten Klebstoff in Pipettenspitzen aus Kunststoff (Spitzen von sogenannten Eppendorf ®-Mikropipetten) geklebt. Durch Aufsetzen dieser Spitzen auf eine Mikropipette von entsprechender Grösse wird die Probe unter Beobachtung durch eine Stereolupe entweder durch Ausnützung der Kapillarkräfte oder durch leichtes Ansaugen in die poröse *innere* Kapillare **10** eingefüllt. Bei den heute verwendeten Biopsienadeln muss das mikrobiopsierte Gewebe vor dem Aufsaugen der Länge nach mit einer Rasierklinge oder einem anderen geeigneten Instrument geteilt werden.

Unter Beobachtung durch eine Stereolupe werden *die leere äussere Kapillare* ***(* 7*)*** *und die mit der Probe* ***(6)*** *gefüllte innere Kapillare* ***(10)*** *der* Probenhalter in eine mit Flüssigkeit **4** , vorzugsweise einem nicht mit Wasser mischbaren Kohlenwasserstoff bzw. halogenierten Kohlenwasserstoff mit tiefem Schmelzpunkt gefüllte Petrischale gelegt, wodurch sich die *Innenräume der äusseren* Kapillaren **7** mit der Flüssigkeit auffüllen. Ein auf dem Boden der Petrischale liegendes Filterpapier dient zum Entfernen überschüssiger Probenflüssigkeit an der Oberfläche der mit der Probe 6 gefüllten *inneren* Kapillare **10** aus porösem Werkstoff. Die derart von überschüssiger Probenflüssigkeit befreite *innere* Kapillare **10** wird mit Hilfe zweier Pinzetten oder anderer geeigneter Instrumente manuell in die *äussere* Kapillare 7 eingeführt. Die Länge der porösen *inneren* Kapillare **10** sollte dabei der Länge der *äusseren* Kapillare **7** entsprechen. Dies ist wichtig, da durch den Einfrierzyklus nur derjenige Bereich der Probe **6** in der porösen *inneren* Kapillare **10** gut gefroren wird, der sich im Bereich der *äusseren* Kapillare **7** befindet, welcher nicht von der Ummantelung **8** bzw. **11** ummantelt ist. Das Bestücken der Probenhalter mit der Probe **6** sollte nur wenige Sekunden dauern, um Fremdeinflüsse auf die Probe **6** so gering wie möglich zu halten. Die bestückten Probehalter werden unverzüglich eingefroren.

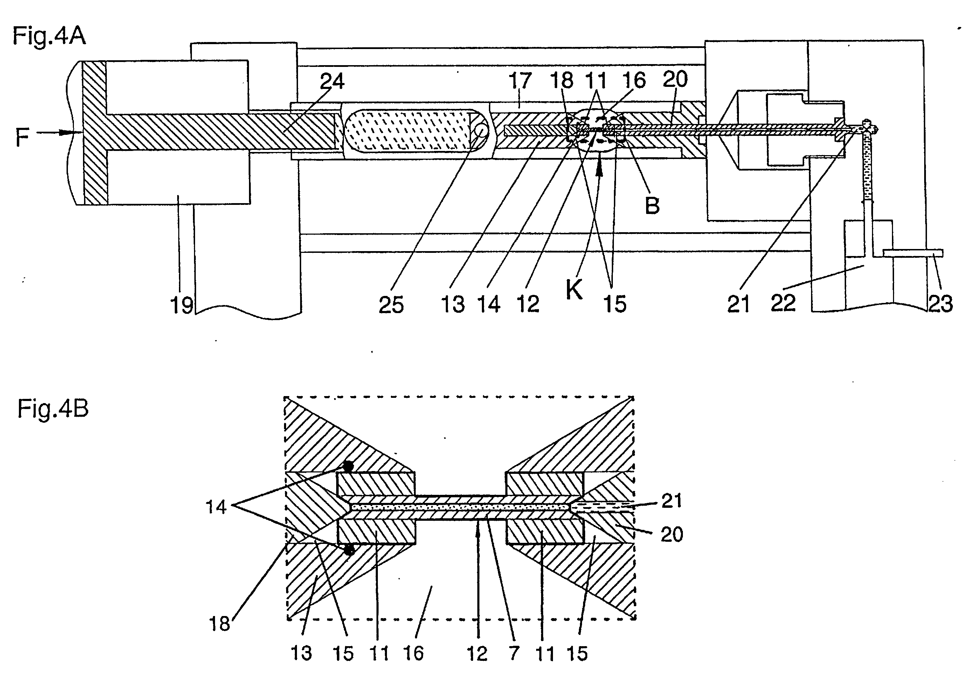

Das Verfahren zum Einfrieren der erfindungsgemässen Probenhalter unter hohem Druck wird in der **Fig.4** an einem Probenhalter **12** gemäss **Fig. 3** erläutert, gilt jedoch sinngemäss auch für die Probenhalter, die in **Figur 1 und** 2 dargestellt sind. In **Fig.4** wird der Probenhalter **12** in einen Probenhalteraufnehmer 13 an sich bekannter Konstruktion eingesetzt und mittels eines O-Ringes **14** festgeklemmt. Ist das *äussere* Rohr **1** oder die Ummantelung **8 bzw. 11** an ihrer Aussenfläche mit einer Ringnut ausgestattet, so wird der Probenhalter **12** mittels einer an sich bekannten Konstruktion durch einen Querbolzen, welcher durch eine Bohrung im Probenhalteraufnehmer **13** eingeführt wird und in die Ringnut passt, an einer vorbestimmten Stelle des Probenhalteraufnehmers **13** befestigt. Anschliessend wird der gefüllte Probenhalteraufnehmer **13** in den dafür vorgesehenen zentrierten Bohrungen **15** einer Hochdruckgefrieranlage eingeführt. Die beiden Ummantelungen **11** des Probenhalters **12** passen dabei in die zentrierten Bohrungen **15**. Die zentrale Partie des Probenhalters **12**, entsprechend dem nicht ummantelten Teil der äusseren Kapillare **7**, liegt in einem Hohlraum **16**, der von einem Schlitz der zylindrischen Führung **17** gebildet wird. Dieser ist notwendig, um möglichst grosse Volumina des Kühlmittels **(K)** pro Zeiteinheit auf den Probenhalter **12** auftreffen zu lassen.

Der Probenhalter wird anschliessend an den Kreislauf des Druckübertragungsmittels angeschlossen: Die *äussere* Kapillare **7** des Probenhalters **12** wird an ihrem einen Ende durch einen massiven Konus **18**, mit einer bestimmten Kraft **(F)**, welche beispielsweise durch einen Pressluftzylinder **19** erzeugt wird, an die konische Öffnung einer Hochdruckleitung **20** gepresst. Der Konus **18** kann auch durch eine in einem Schraubengewinde des Probenhalteraufnehmers **13** bewegliche Schraube gegen die das *äussere Rohr* **1** bzw. die *äussere Kapillare* **7** abschliessende, kegelförmige Ausnehmung **2** bewegt werden und dadurch das *äussere Rohr* **1 bzw.** *die äussere Kapillare* **7** an einem Ende dicht verschlossen werden. Dies ist zweckmässig, wenn die Länge der *äusseren* Kapillare **7** so gewählt wird, dass eines ihrer Enden über die Ummantelung **8 bzw. 11** in die zentrale Bohrung **15** des Probenhalteraufnehmers **13** hinausragt. Die Probe **6** wird nun dicht mit dem Hochdrucksystem, d.h. der konisch zugespitzten Hochdruckleitung **20** verbunden und in den Bohrungen **15** fixiert. Die mit einem Druckübertragungsmittel, beispielsweise Hydrauliköl **21**, gefüllte Hochdruckleitung **20**, welche mit einem Druckgenerator **22** verbunden ist, setzt die Probe **6** im gewünschten Zeitpunkt unter den gewählten hohen Druck und diese wird anschliessend eingefroren.

Das Kühlmittel wird durch eine massive, nicht dargestellte Zuführung, die den Hohlraum **16** vollständig umgibt, kurzzeitig auf die *äussere* Kapillare **7** umgelenkt. Durch mechanische Kopplung der Kühlmittelablenkung und der Auslösung der Arretierung des Druckkolbens **23** werden innerhalb eines Zeitraums im Bereich von 0.10 bis 50 msec, vorzugsweise unter 20 msec, beispielsweise um 10 msec, Druckwerte im Bereich zwischen 1000 und 3000 bar, vorzugsweise in einem Bereich zwischen 1600 und 2045 bar in der Probe **6** erreicht. Synchron dazu wird eine Abkühlung im Bereich zwischen 50 (fünfzig) und 10⁶ (1 Million) °K/sec, vorzugsweise von einigen 1000 °K/sec, an der Oberfläche der *äusseren* Käpillare **7** erzielt. Dadurch ergibt sich in der Probe 6 eine Temperatur im Bereich zwischen - 90 und - 196 °C, wodurch diese ein gefroren wird. Die in **Fig. 1** dargestellten verhältnismässig "dicken" Proben können zweckmässigerweise auch mit kleineren Abkühlgeschwindigkeiten (unter 5000 °K/sec) eingefroren werden. Zum Abkühlen wird ein kommerziell erhältliches Kühlmittel, vorzugsweise ein Kohlenwasserstoff mit niedrigem Siedepunkt, beispielsweise Propan, eingesetzt, welches in einem Metalltank gelagert wird, welcher von aussen mit flüssigem Stickstoff auf eine Temperatur von ca. -180 °C vorgekühlt wird.

Unmittelbar nach dem Einfrieren der Probe **6** wird der Pressluftkolben **24** des Pressluftzylinders **19** zurückgezogen und die Probe **6** im Probenhalter **12** mit Hilfe des Handgriffes **25** am Probenhalteraufnehmer **13** aus der Hochdruckgefrieranlage entnommen und bei Atmosphärendruck unverzüglich in flüssigen Stickstoff getaucht. Unter flüssigem Stickstoff wird der Probenhalter **12** mit Hilfe einer Pinzette manuell aus dem Probenhalteraufnehmer **13** entnommen. Der Probenhalter **12** wird bis zur weiteren Verarbeitung der Probe **6** in flüssigem Stickstoff aufbewahrt.

Die nunmehr gefrorene Probe **6** wird folgendermassen aus dem Probenhalter **12** entfernt: Der Probenhalter **12** wird unter flüssigem Stickstoff in einen Kryostaten gebracht Bei der Temperatur des Kryostaten (im Bereich von - 90 bis - 140 °C , beispielsweise -120°C) schmilzt der Kohlenwasserstoff **4** (z.B. 1-Penten mit einem Schmelzpunkt von -165°C), der die *innere Kapillare* **10** umgibt. Dadurch lassen sich mit Hilfe eines gekühlten (im Bereich um -120°C) Zylinders, vorzugsweise eines metallischen Instruments, zum Beispiel eines Bohrers mit entsprechendem Durchmesser, die gefrorenen *inneren* Kapillaren **10** aus dem porösen Polymerwerkstoff unter Beobachtung durch eine Stereolupe aus der *äusseren Kapillare* **7** manuell herausschieben. Die derart entnommene *innere* Kapillare **10** mit der Probe **6** kann wiederum in flüssigem Stickstoff gelagert oder weiterverarbeitet werden. Anschliessend wird die Probe **6** in den *inneren* Kapillaren **10** der weiteren Verarbeitung nach einer der an sich bekannten Methoden zugeführt. Die *innere* Kapillare **10** aus dem porösen Polymerwerkstoff, vorzugsweise aus poröser Zellulose, stört dabei nicht, insbesondere bildet sie kein Hindernis für das Schneiden der Probe. Gleiches gilt für die Manipulation der verhältnismässig "dicken" Proben **5**. Das dünnwandige *innere Rohr* **3** des Probenhalters aus **Fig. 1**, erlaubt ebenfalls jede Art der Weiterverarbeitung.

## Patentansprüche

1. Probenhalter für wasserhaltige Proben, vorzugsweise für das Gefrieren unter hohem Druck, bestehend aus einem Aufnehmer aus einem gut wärmeleitenden, vorzugsweise metallischen Werkstoff, und einem *Rezipienten in der Form eines* Hohlzylinders aus einem schnittfähigen Werkstoff zur Aufnahme einer Probe, wobei der Raum zwischen *diesem Rezipienten* und der Innenwand des Aufnehmers *zur Aufnahme einer Schicht (4) eingerichtet* ist, welche bei Raumtemperatur flüssig ist,
**dadurch gekennzeichnet, dass**
(a) der Aufnehmer als Hohlzylinder ausgestaltet ist,
(b) aus einem einzigen, *zur Aufnahme eines Innendruckes im Bereich zwischen 1000 und 3000 bar tauglichen* Werkstück besteht,
(c) *an seinen beiden Stirnseiten je eine Ausnehmung* (2) *zum Anschliessen von Druckübertragungsleitungen aufweist,*
(d) einen ebenfalls zylinderförmigen Innenraum zur Aufnahme des Rezipienten mit der Probe (*5*, 6) aufweist, und
(e) dass dieser zylinderförmige Innenraum an beiden Stirnseiten Öffnungen für die Manipulation der Probe (5, 6) und die Veränderung des Druckes in der Probe (*5*, 6) aufweist.

2. Probenhalter nach Patentanspruch 1, **dadurch gekennzeichnet, *dass*** *der Aufnehmer ein äusseres Rohr (1) aus einem Werkstoff mit guter Wärmeleitung, vorzugsweise aus einem Metall ist, und einen Innendurchmesser vorzugsweise im Millimeterbereich, eine Wandstärke entsprechend dem Innendurchmesser und einer Länge vorzugsweise im Bereich zwischen 10 und 20 mm aufweist, und* dass der *Rezipient zur Aufnahme der Probe (5)* ein *in dieses äussere Rohr (1) passendes inneres Rohr* (3) aus einem polymeren Werkstoff ist.

3. Probenhalter nach Patentanspruch 1, **dadurch gekennzeichnet, dass**,
(a) der Aufnehmer eine *äussere Kapillare (7) aus einem Werkstoff mit guter Wärmeleitung*, *vorzugsweise aus einem Metall ist,* und
*(b)* der *Rezipient zur Aufnahme der Probe (6)* eine *innere* Kapillare *(10)* aus einem porösen Polymerwerkstoff, vorzugsweise aus poröser Zellulose, ist.

4. Probenhalter nach Patentanspruch 3, **dadurch gekennzeichnet, dass** er eine Ummantelung (8) aufweist, weiche aus einem metallischen Werkstoff gearbeitet ist, die Form eines Hohlzylinders aufweist, welcher seinerseits mit einer Bohrung in axialer Richtung zur Aufnahme der äusseren Kapillare (7) sowie in seinem zentralen Bereich mit einem in radialer Richtung angeordneten Hohlraum (9) in der Form eines Schlitzes ausgestattet ist.

5. Probenhalter nach Patentanspruch 3, **dadurch gekennzeichnet, dass** er an beiden Stirnseiten je *eine Ummantelung in der Form eines* Hohlzylinders (11) aufweist, welche zur Aufnahme *der äusseren Kapillare* (7) dienen, diese jedoch nicht auf ihrer gesamten Länge umfassen.

6. Probenhalter nach Patentanspruch 3 *bis 5* **dadurch gekennzeichnet, dass** *die äussere Kapillare (7)* einen Innendurchmesser im Bereich von 0.1 bis 0.5 mm und eine Wandstärke im Bereich von 0,3 bis 0.5 mm aufweist.

7. Probenhalter nach Patentanspruch 3 *bis 6,* **dadurch gekennzeichnet, dass** *die innere Kapillare* (10) aus dem porösen Polymerwerkstoff einen Innendurchmesser im Bereich von 0.1 bis 0.5 mm und eine Wandstärke im Bereich von 0,01 bis 0.1 mm aufweist.

8. Probenhalter nach Patentanspruch *1 bis* 7, **dadurch gekennzeichnet, dass** die Schicht (4) aus einer wasserunlöslichen Substanz mit niedrigem Gefrierpunkt besteht.

9. Probenhalter nach Patentanspruch *1 bis 8*, **dadurch gekennzeichnet, *dass*** *die Schicht (4) aus einem Kohlenwasserstoff mit einem Gefrierpunkt unter- 120°C, vozugweise aus1-Penten oder 1-Chlorbutan besteht.*

10. Verfahren zur Verwendung des Probenhalters nach Anspruch 1 für das Gefrieren wasserhaltiger Proben unter hohem Druck, **dadurch gekennzeichnet, dass**
(a) die wasserhaltige Probe ( 5, 6) in einen *Rezipienten aus einem schnittfähigen Werkstoff* eingefüllt wird,
(b) der zylindrische Innenraum eines metallischen *Aufnehmers* mit einer bei Raumtemperatur flüssigen Substanz (4) aufgefüllt wird,
(c) der mit der Probe (*5*, 6) gefüllte *Rezipient* manuell in den Innenraum des *Aufnehmers* eingeführt wird, *wodurch die Substanz (4) eine Zwischenschicht zwischen dem Rezipienten und der Innenwand des Aufnehmers bildet,*
(d) der derart gefüllte *Aufnehmer* an *den* Druckübertragungskreislauf einer an sich bekannten Hochdruckgefrieranlage *mit zwei getrennten Kreisläufen für die Kühlung und die Druckübertragung* angeschlossen wird,
(e) *der Innenraum des Aufnehmers mit der* Probe (5, 6) kurzzeitig unter hohen Druck gesetzt wird, *wobei die Druckübertragung durch ein Druckübertragungsmedium unmittelbar in den Innenraum des Aufnehmers erfolgt, der Druck ausserhalb des Aufnehmers hingegen nicht verändert wird,*
(f) die Probe (5, 6) *im Innenraum des Aufnehmers durch Einwirkung eines Kühlmittels von aussen auf die Wand des Aufnehmers* kurzzeitig stark abgekühlt und dadurch eingefroren wird,
(g) *der Druck im Innenraum des Aufnehmers mit der Probe (5, 6) wieder auf den Wert des atmosphärischen Druckes gesenkt* wird,
(h) die Probe (5, 6) im *Aufnehmer* auf eine Temperatur gebracht wird, bei der die gefrorene Zwischenschicht (4) schmilzt,
(i) die *im Rezipienten aus schnittfähigen Werkstoff* befindliche Probe (6) durch Einführen eines entsprechend dimensionierten Instruments an der Stirnseite des *Aufnehmers* manuell aus dem *Innenraum des Aufnehmers* hinausgestossen und
(j) in diesem Zustand der weiteren Verarbeitung zugeführt wird.

11. Verfahren nach Patentanspruch 10, **dadurch gekennzeichnet, dass** die *innere Kapillare (10)* aus einem porösen Polymerwerkstoff, vorzugsweise aus poröser Zellulose, gefertigt ist und die Probe (6) durch Kapillarkräfte in *diese innere* Kapillare (10) gefüllt wird.

12. Verfahren nach Patentanspruch 10, **dadurch gekennzeichnet, dass** die *innere Kapillare* (10) aus einem porösen Polymerwerkstoff, vorzugsweise poröser Zellulose, gefertigt ist und die Probe (6) durch Ansaugen in *diese innere* Kapillare (10) gefüllt wird.

13. Verfahren nach Patentanspruch 10 bis 12, **dadurch gekennzeichnet, dass** die Flüssigkeit (4) *der Zwischenschicht* im Innenraum des *Aufnehmers* ein nicht mit Wasser mischbarer Kohlenwasserstoff bzw. halogenierter Kohlenwasserstoff mit tiefem Schmelzpunkt ist.

14. Verfahren nach Patentanspruch 10 bis 13, **dadurch gekennzeichnet, dass** der gewählte Druckwert innerhalb von 0.10 bis 50 msec, vorzugsweise weniger als 20 msec, in der Probe (*5,* 6) aufgebaut wird.

15. Verfahren nach Patentanspruch 10 bis 14, **dadurch gekennzeichnet, dass** der Druckwert in der Probe (5, 6) im Bereich zwischen 1000 und 3000 bar, vorzugsweise zwischen 1600 bis 2045 bar, liegt.

16. Verfahren nach Patentanspruch 10 bis 15, **dadurch gekennzeichnet, dass** an der *Aussenseite des Aufnehmers* eine Abkühlungsgeschwindigkeit von 5000 bis 10⁶ (1 Million) °K/sec und eine Temperatur in der Probe (5, 6) zwischen- 90 und - 196 °C erreicht wird.

17. Verfahren nach Patentanspruch 10 bis 16, **dadurch gekennzeichnet, dass** als Kühlmittel ein Kohlenwasserstoff mit niedrigem Siedepunkt verwendet wird, der mit flüssigem Stickstoff auf eine Temperatur von - 180 °C vorgekühlt wird.

18. Verfahren nach Patentanspruch 10 bis 17, **dadurch gekennzeichnet, dass** der Probenhalter (12) nach dem Gefriervorgang auf eine Temperatur im Bereich von - 90 bis - 140 °C gebracht wird, wodurch die *Zwischenschicht* (4) schmilzt.

19. *Verfahren nach Patentanspruch 10 bis 18* , ***dadurch gekennzeichnet*, dass** *der mit der Probe (5,6) gefüllte Rezipient vor dem manuellen Einführen in den Innenraum des Aufnehmers in eine nicht mit* Wasser *mischbare Flüssigkeit mit niedrigem Gefrierpunkt vorzugsweise einem Kohlenwasserstoff mit einem Gefrierpunkt unter - 120 °C, vozugweise in 1-Penten oder 1-Chlorbutan eingefaucht wird.*

## Claims

1. A specimen holder for a hydrous specimen, especially for high pressure freezing, comprising a receiver of a heat conductive material, especially a metal, and a recipient shaped as a hollow cylinder of a material which can be cut, the space between said recipient and an inside wall of the receiver being filled by a layer (4) which is liquid at room temperature, ***characterized in that***
(a) said receiver is a hollow cylinder,
(b) consisting of one single piece capable to resist an inner pressure within the range of 1000 to 3000 bar,
(c) including two end faces, each of which include a recess (2) capable of accommodating connecting lines,
(d) including an equally cylindrical interior space capable of accommodating said recipient containing said specimen (5, 6), and
(e) said cylindrical interior space comprising at said two end faces openings for manipulating the specimen (5, 6) and for adjusting the pressure inside said specimen (5, 6).

2. A specimen holder as claimed in claim 1, wherein said receiver comprises an exterior tube (1) of a heat conductive material, preferably a metal, having an inside diameter preferably in the range of millimetres, a wall thickness corresponding to that of the inside diameter, and a length in the range from 10 to 20 mm, said recipient receiving the specimen (5) including an interior tube (3) made from a polymer material and being adjusted to fit into said exterior tube (2).

3. A specimen holder as claimed in claim 1, wherein
(a) said receiver consists of an exterior capillary (7) made from a heat conductive material, preferably a metal, and
(b) said recipient receiving said specimen (6) consists of an interior capillary (10) made from a porous polymer material, preferably from porous cellulose.

4. A specimen holder as claimed in claim 3, comprising a sheathing (8) made from metal, in the form of a hollow cylinder comprising a bore in axial direction for accommodating said exterior capillary (7) and in its central portion a cavity (9) in the form of a slit that is arranged in axial direction thereof.

5. A specimen holder as claimed in claim 3, comprising at said two end faces one sheathing shaped as hollow cylinders (11) capable of receiving said exterior capillary (7) without enclosing it over its entire length.

6. A specimen holder as claimed in claims 3 through 5, wherein said exterior capillary (7) has an inside diameter in the range from 0.1 to 0.5 mm and a wall thickness in the range from 0.3 to 0.5 mm.

7. A specimen holder as claimed in claims 3 through 5, wherein said interior capillary (10) made from porous polymer material has an inside diameter in the range of 0.1 to 0.5 mm and a wall thickness in the range of 0.01 to 0.1 mm.

8. A specimen holder as claimed in claims 1 through 7, wherein said layer (4) consists of a water insoluble substance with low melting point.

9. A specimen holder as claimed in claims 1 through 8, wherein said layer (4) consists of a hydrocarbon with a melting point below - 120 °C, preferably of 1-pentene, or 1-chlorobutane.

10. A method for freezing hydrous specimens under high pressure using a specimen holder as claimed in claim 1, said method comprising:
(a) introducing the hydrous specimen (5, 6) into a recipient made from a material that can be cut,
(b) filling the cylindrical interior space of a metallic receiver with a substance (4) which is liquid at room temperature,
c) manually introducing the recipient filled with the specimen (5, 6) into the interior space of the receiver said substance (4) thereby forming an intermediate layer between said recipient and the interior wall of said receiver,
(d) connecting said filled receiver to corresponding receiving devices of a pressure transfer circuit of a high-pressure freezing system comprising two separate circuits for freezing and pressure transfer;
(e) subjecting said receiver containing said specimen (5, 6) to high pressure for a short time, whereby the pressure transfer is effected by means of a pressure transfer medium immediately into the interior space of the receiver, the pressure outside of said receiver being maintained unchanged;
(f) intensely cooling said specimen (5, 6) in the interior space of said receiver for a short time by means of a cooling medium from outside into the wall of said receiver so as to thereby freeze said specimen;
(g) subjecting the interior space of said receiver containing said specimen (5, 6) to atmospheric pressure,
(h) bringing said specimen (5,6) in the receiver to a temperature at which the said frozen intermediate layer (4) melts,
(i) pushing the specimen (6) filled in the recipient from material that can be cut out of the interior space of the receiver by introducing an appropriately dimensioned instrument at the end of said receiver, and
(j) sending the specimen to further processing if desired.

11. A method as claimed in claim 10, wherein the inner capillary (10) is a capillary made of a porous polymer material, preferably porous cellulose, and the specimen (6) is introduced into said inner capillary (10) by capillary forces.

12. A method as claimed in claim10, wherein the inner capillary (10) is made of a porous material, preferably from porous cellulose, and the specimen (6) is introduced into said inner capillary (10) by suction.

13. A method as claimed in claims 10 through 12, wherein the substance (4) in the intermediate layer in the interior space of the receiver comprises a hydrocarbon or halogenated hydrocarbon which is not water-miscible and has a low melting point.

14. A method as claimed in claims 10 through 13, wherein a chosen pressure value is built in the specimen (5, 6) within 0.10 and 50 msec, preferably within less than 20 msec.

15. A method as claimed in claims 10 through 14, wherein the pressure value in the specimen (5,6) is in the range between 1000 and 3000 bar, preferably in the range between 1600 and 2045 bar.

16. A method as claimed in claims 10 through 15, wherein a cooling rate of 5000 to 10⁶ (1 million) °K/sec is reached on a surface of the receiver and a temperature between -90 and - 196 °C is reached in the specimen (5, 6).

17. A method as claimed in claims 10 through 16, wherein a hydrocarbon with a low boiling point, which is precooled with liquid nitrogen to a temperature of - 180 °C, is used as the cooling substance.

18. A method as claimed in claims 10 through 17, wherein after the cooling step, the specimen holder (12) is brought to a temperature in the range from -90 to - 140 °C, whereby the intermediate layer (4) melts.

19. A method as claimed in claims 10 through 18, wherein said recipient containing said specimen (5, 6) is immersed prior to being manually introduced into the interior space of the receiver into a non water-miscible liquid with a low melting point, preferably a hydrocarbon with a melting point below - 120 °C, preferably into 1-pentene, or 1-chlorobutane.

## Revendications

1. Support pour échantillons hydratés, notamment pour le procédé de congélation sous pression élevée, comprenant un récepteur formé d'un matériel conducteur thermique, notamment un métal, et un récipient en cylindre vide formé d'un matériel capable d'être tranché et destiné à renfermer un échantillon, le volume entre le récipient et la surface intérieure du récepteur étant destiné à être rempli d'une couche (4) liquide à la température ambiante, ***caractérisé en ce que***
(a) le récepteur a la forme d'un cylindre vide,
(b) formé d'une seule pièce capable à résister une pression intérieure entre 1000 et 3000 bar,
(c) comprenant aux deux parties frontales un recul (2) permettant le rattachement à un système de transfert de pression,
(d) comprenant un espace intérieur cylindrique destiné à reprendre le récipient contenant l'échantillon (5,6), et
(e) que cet espace intérieur cylindrique contient aux deux parties frontales des ouvertures destinés à la manipulation de l'échantillon (5, 6) et le réglage de la pression.

2. Support pour échantillons hydratés selon la revendication 1, **caractérisé en ce que** le récepteur possède un tube extérieur (1 ) formé d'une matière d'une conductivité thermique élevée, notamment un métal, possédant un diamètre intérieur notamment en millimètres, une épaisseur correspondant au diamètre intérieur et une longueur notamment entre 10 et 20 mm, et que le récipient contenant l'échantillon est un tube intérieur (3) formé d'un matériel polymérique introduit dans le tube extérieur (1).

3. Support pour échantillons hydratés selon la revendication 1, **caractérisé en ce que**
(a) le récepteur est un tuyau capillaire (7) formé d'un matériel d'une conductivité thermique élevée, notamment un métal, et
(b) le récipient contenant l'échantillon (6) est un tuyau capillaire intérieur (10) formé d'un matériel polymérique poreux, notamment de cellulose poreuse.

4. Support pour échantillons hydratés selon la revendication 3, **caractérisé en ce qu'**il comprend une couverture (8) formée d'un matériel métallique en forme de cylindre vide possédant un forage en direction axiale pour renfermer le tuyau capillaire extérieur (7) et possédant un recul (9) formé en fente radiale dans sa partie centrale.

5. Support pour échantillons hydratés selon la revendication 3, **caractérisé en ce qu'**il possède aux deux parties frontaux une couverture en forme de cylindre vide (11) renfermant le tuyau capillaire (7) mais ne couvrant pas la longueur entière de ce dernier.

6. Support pour échantillons hydratés selon l'une des revendications 3 à 5, **caractérisé en ce que** le tuyau capillaire (7) a un diamètre intérieur entre 0.1 et 0.5 mm et une épaisseur du matériel entre 0.3 et 0.5 mm.

7. Support pour échantillons hydratés selon l'une des revendications 3 à 5, **caractérisé en ce que** le tuyau capillaire (10) d'un matériel polymérique poreux possède un diamètre intérieur entre 0.1 et 0.5 mm et une épaisseur du matériel entre 0.01 et 0.1 mm.

8. Support pour échantillons hydratés selon l'une des revendications 1 à 7, **caractérisé en ce que** la couche (4) est une substance insoluble à l'eau et possédant un point de congélation bas.

9. Support pour échantillons hydratés selon l'une des revendications 1 à 8, **caractérisé en ce que** la couche (4) contient un hydrocarbure avec un point de congélation en dessous de - 120 °C, notamment 1-pentène ou 1-chlorobutane.

10. Procédé utilisant le support pour échantillons selon la revendication 1 pour la congélation des échantillons hydratés sous pression élevée **caractérisé en ce que**
(a) l'échantillon hydraté (5, 6) est placé dans un récipient formé d'un matériel capable d'être tranché,
(b) l'espace intérieur d'un récepteur métallique est rempli d'une substance liquide à la température ambiante,
c) le récipient rempli de l'échantillon (5, 6) est introduit manuellement dans l'espace intérieur du récepteur la substance (4) formant une couche intermédiaire entre le récipient et le surface intérieure du récepteur,
(d) le récepteur ainsi rempli est rattaché aux système de pression d'une installation de congélation à pression élevée possédant deux systèmes séparés pour le réfrigérant et le transfert de pression,
(e) l'intérieur du récepteur contenant l'échantillon (5, 6) est mis sous pression élevée pour une période de courte durée le transfert de pression étant réalisé par un moyen de transfert de pression immédiatement à l'intérieur du récepteur la pression à l'extérieur du récepteur restant inchangée,
(f) l'échantillon (5, 6) à l'intérieur du récepteur est réfrigéré instantanément et congelé à l'aide d'un moyen réfrigérant appliqué de l'extérieur à la surface du récepteur,
(g) la pression à l'intérieur du récepteur contenant l'échantillon (5, 6) est ajustée à la pression atmosphérique,
(h) l'échantillon (5, 6) dans le récepteur et ajusté à une température à laquelle la couche intermédiaire (4) devient liquide,
(i) l'échantillon (6) dans le récipient formé de matériel capable d'être tranché est expulsé manuellement hors de l'intérieur du récepteur en introduisant un instrument par la partie frontale du récepteur, et
(j) est transféré dans cet état à un traitement ultérieur.

11. Procédé selon la revendication 10 **caractérisé en ce que** le tuyau capillaire intérieur (10) est formé d'un polymère poreux, notamment de cellulose poreuse, et que l'échantillon (6) est introduit dans ce tuyau capillaire intérieur (10) à l'aide de forces capillaires.

12. Procédé selon la revendication 10 **caractérisé en ce que** le tuyau capillaire intérieur (10) est formé d'un polymère poreux, notamment de cellulose poreuse, et que l'échantillon (6) est aspiré dans le tuyau capillaire intérieur (10).

13. Procédé selon l'une des revendications 10 à 12 **caractérisé en ce que** le liquide (4) de la couche intermédiaire à l'intérieur du récepteur est un hydrocarbure ou un hydrocarbure halogéné insoluble à l'eau et ayant une température de fusion basse.

14. Procédé selon l'une des revendications 10 à 13 **caractérisé en ce que** la pression choisie est appliquée à l'échantillon dans un délai de 0.10 à 50 msec, notamment moins de 20 msec.

15. Procédé selon l'une des revendications 10 à 14 **caractérisé en ce que** la pression à l'échantillon (5, 6) est ajustée entre 1000 et 3000 bar, notamment entre 1600 et 2045 bar.

16. Procédé selon l'une des revendications 10 à 15 **caractérisé en ce que** une vitesse de réfrigération de 5000 à 10⁶ (1 million) °K/sec est atteinte à la surface du récepteur et une température de l'échantillon (5, 6) entre -90 et- 196 °C.

17. Procédé selon l'une des revendications 10 à 16 **caractérisé en ce que** un hydrocarbure à température de fusion basse est utilisé et réfrigéré par le nitrogène liquide à une température de - 180 °C.

18. Procédé selon l'une des revendications 10 à 17 **caractérisé en ce que** le support (12) est ajusté après le procédé de congélation à une température entre - 90 et - 140 °C résultant à la fonte de la couche intermédiaire (4).

19. Procédé selon l'une des revendications 10 à 18 **caractérisé en ce que** le récipient contenant l'échantillon (5, 6) est immergé avant d'être introduit à l'intérieur du récepteur dans un liquide insoluble à l'eau et ayant une température de congélation basse, notamment dans un hydrocarbure à température de congélation en dessous de - 120 °C, notamment la 1-pentène ou la 1-chlorobutane.
